# EUROPEAN PATENT SPECIFICATION

(11) **EP 1 873 060 B1**
(45) Date of publication and mention of the grant of the patent: **07.04.2010**
(21) Application number: 06116063.6
(22) Date of filing: 26.06.2006
(51) Int. Cl.: B64D 15/12

(54) **Hybrid electrical ice protection system and method including an energy saving mode**
Hybrides elektrisches Enteisungssystem und Verfahren mit einem Energiesparmodus
Système hybride de dégivrage électrique et un procédé avec un mode d'économie d'énergie

(43) Date of publication of application: 02.01.2008
(73) Proprietor: Honeywell International Inc., Morristown NJ 07960 (US)
(72) Inventor: Chow, Philip S., Gilbert, AZ 85233 (US); Derouineau, Jean-Luc, 31700 Cornebarrieu (FR)
(74) Representative: Haley, Stephen

(56) References cited:
- EP-A2- 0 749 894
- GB-A- 2 319 942
- US-A- 3 013 752
- US-A- 3 204 084

## Description

The present invention relates to aircraft ice protection and, more particularly, to a hybrid electrical aircraft ice protection system and method that includes an energy saving mode.

Electrical ice protection systems having first and second heaters are known, e.g. from EP-A2-0 749 894, GB-A-2 319 942, US-A-3 013 752 or US-A-3 204 084.

When an aircraft is flown during certain atmospheric conditions, ice can form and potentially accumulate on one or more of its exterior surfaces. Such ice formation and accumulation can result from, for example, impingement of atmospheric water droplets. The formation and accumulation of ice can have certain adverse and/or deleterious effects on aircraft performance.

For example, following its formation on an exterior surface, ice can break loose and enter the aircraft engines, or collide with protruding surfaces such as antennas, wings, moveable control surfaces, or various structures on the ground. Ice accumulation on airfoil surfaces such as wings and empennages can also adversely affect airfoil aerodynamic performance. In addition, the weight of any accumulated ice may change the overall weight and/or center of gravity of the aircraft. Moreover, ice accumulation on moveable surfaces may interfere with the operation of the moveable surface. Consequently, many aircraft include an ice protection system that either prevents the formation of ice on aircraft surfaces or removes ice that forms on such surfaces.

An aircraft ice protection system is typically configured to implement one, or perhaps two, types of ice protection methods. The ice protection methods that may be implemented generally categorized as either anti-ice methods or de-ice methods. Anti-icing methods typically prevent ice formation on aircraft surfaces altogether, whereas de-ice methods typically allow ice to form on aircraft surfaces and periodically removes the formed ice.

Generally, there are two known anti-ice methods that may be implemented by an aircraft ice protection system. These anti-ice methods include the fully-evaporative method and the wet running method. The fully-evaporative anti-ice method fully evaporates all impinging water by heating the aircraft structure to a relatively high temperature. With the wet running method, ice formation is prevented by heating, or applying freezing point depressants to, the areas where the water is impinging. The impinging water is not evaporated, but instead runs downstream of the impinging area.

As regards de-icing methods, there are generally three different types, thermal, chemical, and mechanical. The thermal de-ice method uses thermal energy to raise the temperature of the surface, either electrically or by hot engine bleed air. The chemical de-ice method is implemented by applying a chemical freezing point depressant to the ice through pores in the structure. The formed ice then turns to slush and is swept away by the airstream. The mechanical de-ice method is typically implemented by using one or more devices to deform the exterior surface of the structure to break up the ice and allow it to be swept away by the airstream.

Although the above-described anti-ice and de-ice methods are generally safe, reliable, and robust, each suffers certain drawbacks. For example, the fully-evaporative anti-ice method requires a significant amount of thermal energy to implement. While the running wet anti-ice method requires less thermal energy than the fully-evaporative method, the amount of energy may still be significant. As regards the de-ice methods, although each of the above-described de-ice methods may require less energy to implement than either of the two anti-ice methods, the use of only a de-ice method on an aircraft is typically not implemented. Rather, a de-ice method, if implemented, is typically done so in combination with either the fully-evaporative anti-ice method or the wet running anti-ice method. This is typically done because, for example, ice formation on the some of the aircraft surfaces may adversely impact flight performance, and ice that is removed from an engine nacelle may be ingested into the engine, which can have deleterious effects.

In view of the foregoing, it may be seen that currently known aircraft ice protection systems typically use a relatively significant amount of energy. Moreover, as may be appreciated, the aircraft ice protection system is typically treated as a system that is required to be available throughout the flight of an aircraft. As such, even if the aircraft were to experience a highly unlikely event that resulted in the aircraft being able to supply less than full electrical power to its electrical loads, the aircraft ice protection system may still need to be operated at full capability.

Hence, there is a need for an aircraft ice protection system and method that can implement an adequate level of ice protection for an aircraft even if the aircraft were to experience a highly unlikely event that resulted in the aircraft being unable to supply full electrical power. The present invention addresses at least this need.

The present invention provides a hybrid ice protection system and method that implements an adequate level of ice protection for an aircraft even if the aircraft experiences a highly unlikely event that results in the aircraft being unable to supply full electrical power.

In one embodiment, and by way of example only, an electrical ice protection system for an aircraft that includes a structure having at least an outer skin, and is operable in at least a nominal power condition and an off-nominal power condition includes a plurality of electrical heaters, and a controller. The plurality of electrical heaters are disposed at least proximate the aircraft structure outer skin and are configured to heat at least a portion of the aircraft structure outer skin upon energization thereof. The plurality of electrical heaters includes at least a first set of heaters and a second set of heaters. The controller is configured to determine whether the aircraft is in the nominal power condition or the off-nominal power condition. The controller is coupled to each of the electrical heaters and is further configured, in response to the determined power condition, to selectively energize the first set of heaters in a manner that the first set of heaters are operated in a fully-evaporative anti-ice mode, and selectively energize the second set of heaters in a manner that the second set of heaters are operated in (i) a wet running anti-ice mode, if the aircraft is in the nominal power condition, and (ii)de-ice mode, if the aircraft is in the off-nominal power condition.

In another exemplary embodiment, an electrical ice protection system for an aircraft that includes an engine nacelle having at least an inboard surface and an adjacent outboard surface, each including an outer skin, and that is operable in at least a nominal power condition and an off-nominal power condition, includes a first set of electrical heaters, a second set of electrical heaters, and a controller. The first set of electrical heaters are disposed proximate the engine nacelle inboard surface outer skin and are configured, upon energization thereof to heat at least a portion of the engine nacelle inboard surface outer skin. The second set of electrical heaters are disposed proximate the engine nacelle outboard surface outer skin and are configured, upon energization, thereof, to heat at least a portion of the engine nacelle outboard surface outer skin. The controller is configured to determine whether the aircraft is in the nominal power condition or the off-nominal power condition, and is coupled to the first and second set of electrical heaters. The controller is further configured, in response to the determined power condition, to selectively energize the first set of electrical heaters in a manner that the first set of heaters are operated in a fully-evaporative anti-ice mode, and selectively energize the second set of electrical heaters in a manner that the second set of electrical heaters are operated in (i) a wet running anti-ice mode, if the aircraft is in the nominal power condition, and (ii) a de-ice mode, if the aircraft is in the off-nominal power condition.

In still another exemplary embodiment, an electrical ice protection system for an aircraft that includes a wing having at least an upper surface and a lower surface, and is operable in at least a nominal power condition and an off-nominal power condition, includes a first set of electrical heaters, a second set of electrical heaters, and a controller. The first set of electrical heaters are disposed proximate the wing upper surface outer skin, and are configured, upon energization thereof to heat at least a portion of the wing upper surface outer skin. The second set of electrical heaters are disposed proximate the wing lower surface outer skin, and are configured, upon energization thereof, to heat at least a portion of the wing lower surface outer skin. The controller is configured to determine whether the aircraft is in the nominal power condition or the off-nominal power condition, and is coupled to the first and second set of electrical heaters. The controller is further configured, in response to the determined power condition, to selectively energize the first set of electrical heaters in a manner that the first set of heaters are operated in a fully-evaporative anti-ice mode, and selectively energize the second set of electrical heaters in a manner that the second set of electrical heaters are operated in (i) a wet running anti-ice mode, if the aircraft is in the nominal power condition, and (ii) a de-ice mode, if the aircraft is in the off-nominal power condition.

In yet a further exemplary embodiment, an electrical ice protection system for an aircraft that includes an engine nacelle and an aircraft wing, in which the engine nacelle has at least an inboard surface and an adjacent outboard surface, each with an outer skin, and the aircraft wing has at least an upper surface and a lower surface, each with an outer skin, and is operable in at least a nominal power condition and an off-nominal power condition, includes a first set of electrical heaters, a second set of electrical heaters, a third set of electrical heaters, a fourth set of electrical heater and a controller. The first set of electrical heaters are disposed proximate the engine nacelle inboard surface outer skin, and are configured, upon energization thereof; to heat at least a portion of the Engine nacelle inboard surface outer skin. The second set of electrical heaters are disposed proximate the engine nacelle outboard surface outer skin, and are configured, upon energization thereof, to heat at least a portion of the engine nacelle outboard surface outer skin. The third set of electrical heaters are disposed proximate the aircraft wing upper surface outer skin, and are configured, upon energization thereof, to heat at least a portion of the wing upper surface outer skin. The fourth set of electrical heaters are disposed proximate the aircraft wing lower surface outer skin, and are configured, upon energization thereof, to heat at least a portion of the wing lower surface outer skin. The controller is configured to determine whether the aircraft is in the nominal power condition or the off-nominal power condition, and is coupled to the first, second, third, and fourth sets of electrical heaters. The controller is further configured, in response to the determined power condition, to selectively energize the first and third sets of electrical heaters in a manner that the first and third sets of electrical heaters are operated in a fully-evaporative anti-ice mode, and selectively energize the second and fourth sets of electrical heaters in a manner that the second and fourth sets of electrical heaters are operated in (i) a wet running anti-ice mode, if the aircraft is in the nominal power condition, and (ii) a de-ice mode, if the aircraft is in the off-nominal power condition.

In yet still a further exemplary embodiment, a method of implementing ice protection for an aircraft that is operable in at least a nominal power condition and an off-nominal power condition includes operating a first set of heaters in a My-evaporative anti-ice mode. A second set of heaters is operated in a wet running anti-ice mode when the aircraft is in the nominal power condition, and in a de-ice mode when the aircraft is in the off-nominal power condition.

Other independent features and advantages of the preferred ice protection, system and method will become apparent from the following detailed description, taken in conjunction with the accompanying drawings which illustrate, by way of example, the principles of the invention.
In the accompanying drawings.-

FIG. 1 is functional block diagram of an exemplary embodiment of a hybrid electrical ice protection system for an aircraft according to the present invention;

FIG. 2 is a simplified cross section view of a portion of an engine nacelle that may use the ice protection system of PIG. 1, illustrating the operational configuration of the system when the aircraft is configured in a nominal power condition;

FIG. 3 is a simplified cross section view of a portion of an aircraft airfoil structure, such as a wing or empennage, that may use the ice protection system of FIG. 1, illustrating the operational configuration of the system when the aircraft is configured in a nominal power condition;

FIG. 4 is a simplified cross section view of the portion of the engine nacelle of FIG. 2, illustrating the operational configuration of the system when the aircraft is configured in an off-nominal power condition;

FIG. 5 is a simplified cross section view of the portion of the aircraft airfoil of FIG. 3, illustrating the operational configuration of the system when the aircraft is configured in an off-nominal power condition;

FIG. 6 is a view of an outboard surface of a portion of the engine nacelle of FIG. 1, showing the implementation of a portion of some heaters thereon when the system is configured as shown in FIG. 4;

FIG. 7 is a simplified, flattened view of a portion of the aircraft airfoil of FIG. 2, showing portions of both the upper and lower surfaces thereof, and illustrating the implementation of a portion of some heaters thereon when the system is configured as shown in FIG. 5; and

FIG. 8 illustrates a portion of a known electrical heater that may be used to form part of the system of FIG. 1.

The following detailed description of the invention is merely exemplary in nature and is not intended to limit the invention or the application and uses of the invention. Furthermore, there is no intention to be bound by any theory presented in the preceding background of the invention or the following detailed

### description of the invention.

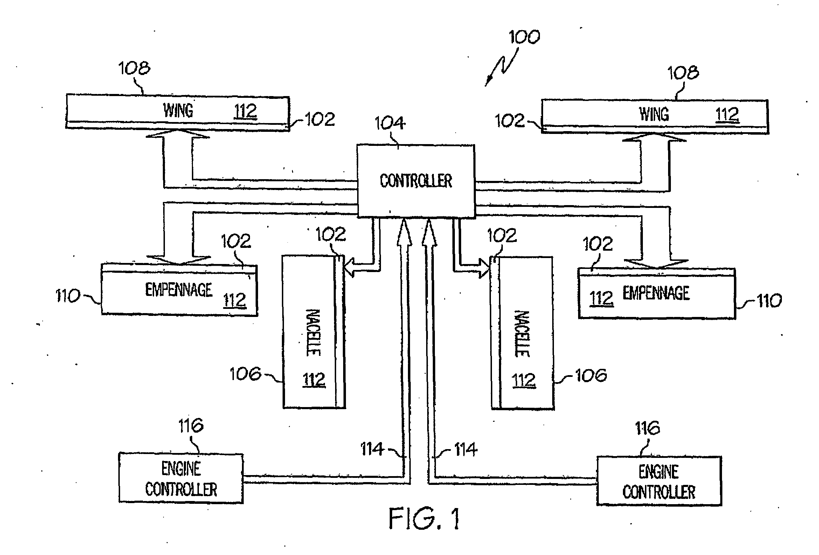

Turning now to the description and with reference first to FIG. 1, an exemplary embodiment of an hybrid ice protection system 100 is shown. The system 100 includes a plurality of electrical heaters 102 and a heater controller 1 04. The plurality of electrical heaters 102 are associated with, and used to heat portions of, various aircraft structures. For example, certain of the heaters 102 are used to heat portions of the engine nacelle 106, certain of the heaters 102 are used to heat portions of the aircraft wings 108, and certain of the heaters are used to heat portions of various aircraft empennages 110.

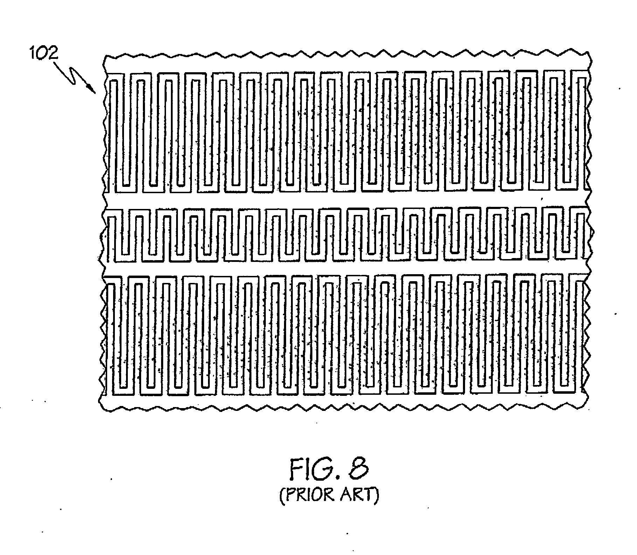

Each of the various aircraft structures 106, 108, 110 includes an outer skin 112 on which ice may form and/or accumulate. The heaters 102 are disposed at least proximate the outer skin 112 on each of the aircraft structures 106, 108, 110 and, as will be described in more detail further below are divided into a plurality of heater sets. Preferably, the heaters 102 are disposed underneath the outer skin 112; however, it will be appreciated that the heaters 102 may alternatively be disposed external to the outer skin 112. No matter which aircraft structure the heaters 102 are associated with, nor the specific physical location of the heaters 102 relative to the outer skin 112, each heater 102 is an electro-thermal type heater that, upon energization, heats the outer skin 112 to a temperature that will either melt ice that has formed or accreted on the structure, or prevent ice formation thereon altogether. It will be appreciated that the temperature to which the heaters 102 heat the outer skin 112 will depend, at least in part, on the particular mode in which the heaters 102 are being operated, which is in turn determined by the heater controller 104. It will additionally be appreciated that the heaters 102 may be any one of numerous types of electro-thermal heaters now known or developed in the future. For completeness, an non-limiting example of just one embodiment of a portion of a presently known electro-thermal heater 102 is shown in FIG. 8.

Returning once again to FIG. 1, the heater controller 104 is coupled to each of the heaters 102 and is configured to selectively energize the heaters 102 in such a manner that the heaters 102 are operated in one or more of three modes - a fully-evaporative anti-ice mode, a wet running anti-ice mode, or a de-ice mode. As will be described in more detail further below, the modes in which the heaters 102 are operated depend on the electrical power generation capability, or "power condition," of the aircraft. In this regard, the heater controller 104 is adapted to receive one or more aircraft power condition signals 114, which are representative of the power condition of the aircraft. The heater controller 104, using the aircraft power condition signals 114, determines the present power condition of the aircraft and, in response, selectively energizes the heaters 102 to operate in one or more of the three modes. In the depicted embodiment, the heater controller 104 receives the aircraft power condition signals from one or more engine controllers 116, though it will be appreciated that the signals representative of power condition could come from any one of numerous other sources.

The purpose for switching the operational modes of the heaters 102 based on the aircraft power condition will be described in more detail further below. Before doing so, however, a description of how the heaters 102 are arranged on the engine nacelle 106, the aircraft wings 108, and the various other empennages 110 will first be provided.

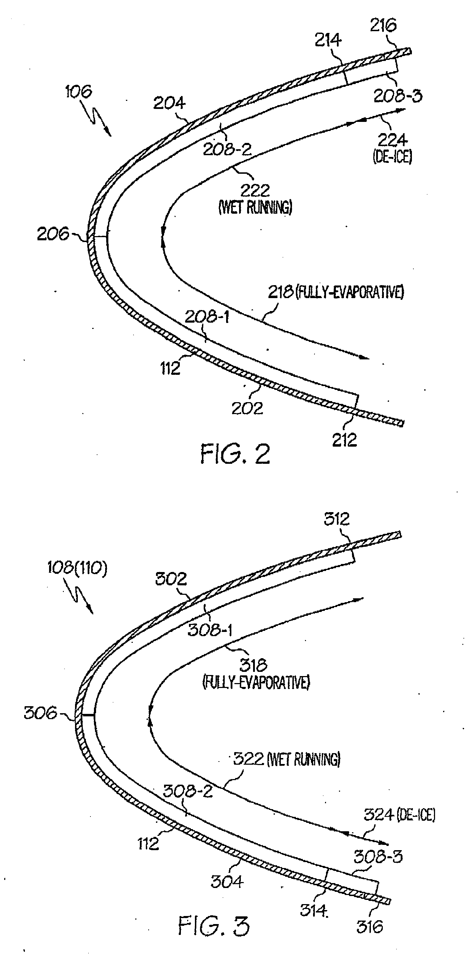

Taming now to FIG. 2, a simplified cross section view of a portion of one of the engine nacelles 106 is shown. The engine nacelle 106 includes an inboard surface 202, an outboard surface 204, and a leading edge 206. The heaters 102 for the engine nacelle 106 are disposed proximate the nacelle outer skin 112, and are divided into three sets - a first set of nacelle heaters 208-1, a second set of nacelle heaters 208-2, and a third set of nacelle heaters 208-3. In the depicted embodiment, the first set of nacelle heaters 208-1 is positioned to heat, when energized, a portion of the nacelle inboard surface 202. More specifically, the first set of nacelle heaters 208-1, when energized, heats the nacelle inboard surface 202 between the nacelle leading edge 206 and a predetermined inboard position 212. Although the predetermined inboard position 212 may vary, it preferably corresponds to a position that is at least proximate the air impingement limit of the nacelle inboard surface 202.

The second 208-2 and third 208-3 sets of nacelle heaters are both positioned to heat, when energized, portions of the nacelle outboard surface 204. More specifically, the second set of nacelle heaters 208-2, when energized, heats the nacelle outboard surface 204 between the nacelle leading edge 206 and a first predetermined outboard position 214, and the third set of nacelle heaters 208-3, when energized, heats the nacelle outboard surface 204 between the first predetermined outboard position 214 and a second predetermined outboard position 216. As with the predetermined inboard position 212, the first 214 and second 216 predetermined outboard positions may vary. However, the first predetermined outboard position 214 preferably corresponds to a position that is at least proximate the air impingement limit of the nacelle outboard surface 204, and the second predetermined outboard position 216 corresponds to the location at which runback water could freeze.

With reference now to FIG. 3, a simplified cross section view of a portion of one of the aircraft wings (or empennages) 108 (or 110) is shown. The depicted aircraft wing (empennage) 108 (110) includes an upper surface 302, a lower surface 304, and a leading edge 306. The heaters 102 for the aircraft wing (empennage) 108 (110) are disposed proximate the wing (empennage) outer skin 112 and, similar to the engine nacelle heaters 208, are divided into three sets - a first set of wing (empennage) heaters 308-1, a second set of wing (empennage) heaters 308-2, and a third set of wing (empennage) heaters 308-3. In the depicted embodiment, the first set of wing (empennage) heaters 308-1 is positioned to heat, when energized, a portion of the wing (empennage) upper surface 302. More specifically, the first set of wing (empennage) heaters 308-1, when energized, heats the wing (empennage) upper surface 302 between the wing (empennage) leading edge 306 and a predetermined upper position 312. Although the predetermined upper position 312 may vary, it preferably corresponds to a position that is at least proximate the air impingement limit of the wing (empennage) upper surface 302.

The second 308-2 and third 308-3 sets of wing (empennage) heaters are both positioned to heat, when energized, portions of the wing (empennage) lower surface 304. More specifically, the second set of wing (empennage) heaters 308-2, when energized, heats the wing (empennage) lower surface 304 between the wing (empennage) leading edge 306 and a first predetermined lower position 314, and the third set of wing (empennage) heaters 308-3, when energized, heats the wing (empennage) lower surface 304 between the first predetermined lower position 314 and a second predetermined lower position 316. As with the predetermined upper position 312, the first 314 and second 316 predetermined lower positions may vary. However, the first predetermined lower position 314 preferably corresponds to a position that is at least proximate the air impingement limit of the wing (empennage) lower surface 304, and the second predetermined lower position 316 corresponds to the location at which runback water could refreeze.

As was noted above, the heater controller 104 selectively operates the heaters 102 in one of three modes, depending on the aircraft power condition. Moreover, as will now be further described, the specific modes implemented depend on the specific aircraft structure 106,108,110 for which ice protection is being provided, and the portion of the aircraft structure 106,108,110 that is being heated.

More specifically, and with reference to FIGS. 1 and 2 in combination, when the aircraft is operating in a nominal power condition, each of the engine controllers 116 will supply aircraft power condition signals 114 to the heater controller 104 representative of this condition. In response, the heater controller 104 selectively energizes the first 208-1, second 208-2, and third 208-3 sets of nacelle heaters to operate in the fully-evaporative anti-ice mode, the wet running anti-ice mode, and the de-ice mode, respectively. Thus, during nominal power conditions the engine nacelles 106 each include three different ice protection zones - a fully-evaporative anti-ice zone 218, a wet running anti-ice zone 222, and a de-ice zone 224.

The nacelle fully-evaporative anti-ice zone 218, which extends from the nacelle leading edge 206 to the predetermined inboard position 212, prevents ice from being ingested into the engine (not shown). The nacelle wet running anti-ice zone 222, which extends from the nacelle leading edge 206 to the first predetermined outboard position 214, maintains sufficient aerodynamic smoothness of the nacelle outboard surface 204. The nacelle de-ice zone 224, which is downstream of the wet running anti-ice zone 222 and is disposed between the first 214 and second 216 predetermined outboard positions, sheds any runback water that may be re-frozen upon flowing way from the nacelle wet running zone 222.

Similarly, and with reference now to FIGS. 1 and 3 in combination, when the aircraft is operating in the nominal power condition, the heater controller 104 selectively energizes the first 308-1, second 308-2, and third 308-3 sets of wing (empennage) heaters to operate in the fully-evaporative anti-ice mode, the wet running anti-ice mode, and the de-ice mode, respectively. Thus, during nominal power conditions the wings (empennages) 108 (110) also include a fully-evaporative anti-ice zone 318, a wet running anti-ice zone 322, and a de-ice zone 324.

The wing (empennage) fully-evaporative anti-ice zone 318, which extends from the wing (empennage) leading edge 306 to the predetermined upper position 312; prevents ice from being formed on the wing (empennage) upper surface 302, to thereby maintain aerodynamic smoothness over the entire wing (empennage) upper surface 302. The wing (empennage) wet running anti-ice zone 322, which extends from the wing (empennage) leading edge 306 to the first predetermined lower position 314, maintains sufficient aerodynamic smoothness over a portion of the wing (empennage) lower surface 304. The wing (empennage) de-ice zone 324, which is downstream of the wing (empennage) wet running anti-ice zone 322 and is disposed between the first 314 and second 316 predetermined lower positions, sheds any runback water that may be re-frozen upon flowing out of the wing (empennage) wet running zone 322.

If, in the unlikely event the aircraft is operating in an off-nominal power condition, the amount of electrical power available for the various electrical loads on the aircraft will be reduced. In some instances, depending on the cause of the off-nominal power condition, the amount of electrical power may be significantly reduced. For example, in the highly unlikely event that one of the aircraft engines became inoperative during flight, the available electrical power would be significantly reduced. Depending on the environmental conditions, it may be necessary, or at least desirable, to continue operating the aircraft: ice protection system 100, even during the off-nominal power condition. Thus, as will now be described, the heater controller 104 reconfigures the operational modes of each of some the heaters 102 when an off-nominal power condition occurs.

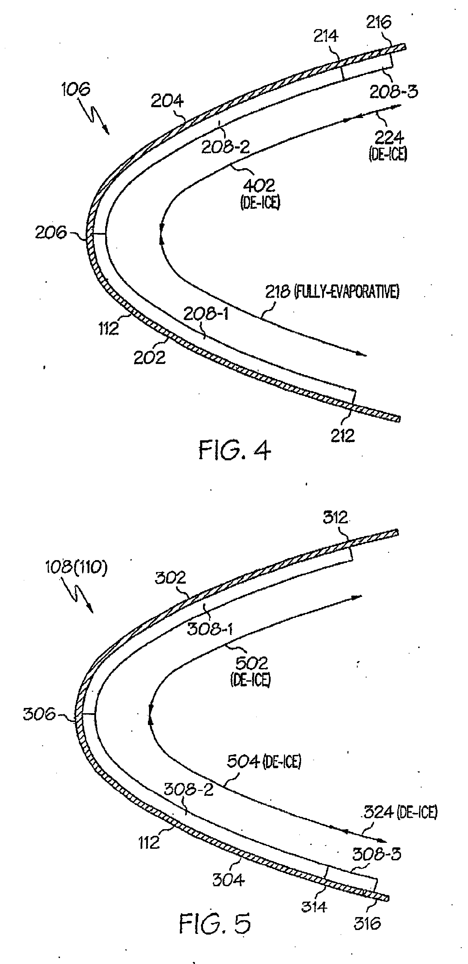

Referring now to FIGS. 1 and 4 in combination, it is seen that when the aircraft is operating in an off-nominal power condition each of the engine controllers 116 will supply aircraft power condition signals 114 to the heater controller 104 representative of this condition. In response, the heater controller 104 continue to selectively energize the first set of nacelle heaters 208-1 to operate in the fully-evaporative anti-ice mode; however, the heater controller 104 selectively energizes the second 208-2 and third 208-3 sets of nacelle heaters such that both sets operate in the de-ice mode. Thus, during off-nominal power conditions the nacelle fully-evaporative anti-ice zone 218 and the de-ice zone 224 are unchanged, while the nacelle wet running anti-ice zone 222 is switched to a second nacelle de-ice zone 402. Moreover, as is shown in FIG. 5, the heater controller 104, during an off-nominal power condition, selectively energizes the first 308-1, second 308-2, and third 308-3 sets of wing (empennage) heaters in a manner that all three sets operate in the de-ice mode. Thus, while the wing (empennage) de-ice zone 324 is unchanged, the wing (empennage) fully-evaporative 318 and wet running 322 anti-ice zones are switched to second 502 and third 504 wing (empennage) de-ice zones.

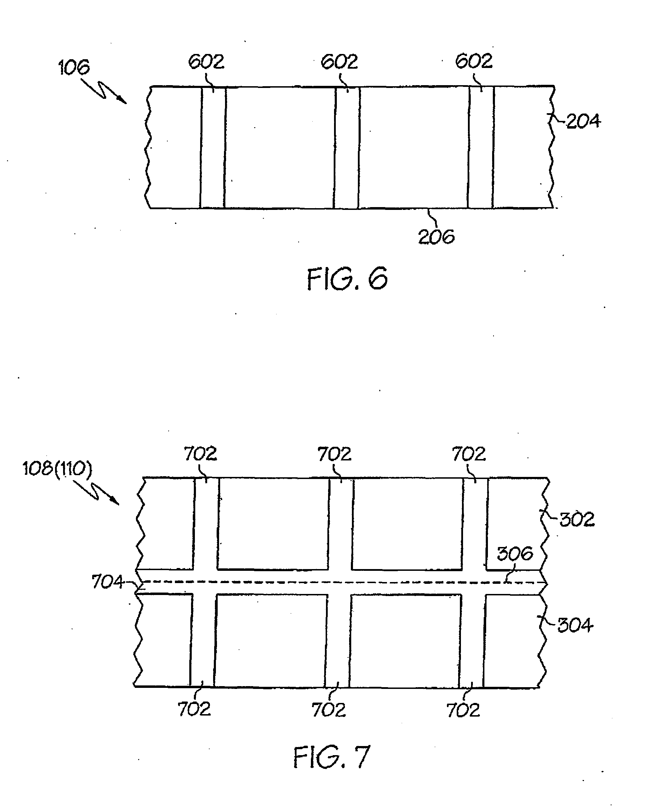

In addition to the above-described general changes in heater operational modes, the ice protection system 100 also preferably configured to implement a portion of the heaters 102 to function as additional parting strips during operation in the off-nominal power condition. In particular, and with reference to FIG. 6, when the second set of nacelle heaters 208-2 is energized to operate in the de-ice mode, some of the heaters arc implemented as chordwise parting strips 602 to facilitate shedding. Additionally, as is shown more clearly in FIG. 7, when the first 308-1 and second 308-2 sets of wing (empennage) heaters are energized to operate in the de-ice mode, some of the heaters are implemented as chordwise parting strips 702 and some are implemented as spanwise parting strips 704, both of which also facilitate shedding.

The hybrid electrical ice protection system 100 implement three ice protection methods in various combinations. These ice protection methods include the fully-evaporative anti-ice protection method, the wet running anti-ice protection method, and the de-ice method. Moreover, the particular methods that are implemented vary, depending on the particular aircraft structure 106, 108, 110 for which ice protection is being provided and on the power condition of the aircraft. Implementing these three ice protection methods in combination provides significant energy savings as compared to implementing a single ice protection method on a particular structure 106, 108, 110. In addition, the hybrid electrical system 100 is reconfigured upon determining that the aircraft is in an off-nominal power condition. The energy savings are even further increased when the system is reconfigured 100.

As an example of the energy savings that may be realized by the hybrid electrical system 100, the energy requirements for an aircraft that uses hot engine bleed air to implement the fully-evaporative anti-ice method is compared to the energy requirements of the hybrid electrical system 100. The comparison is based on an aircraft having ice protected surface areas of 16 m² for the wing and empennages, and 13 m² for the engine nacelles. The hot engine bleed air system implementing the fully-evaporative anti-ice method on these structures would require about 831 kW of power. Conversely, the hybrid electrical system 100, during the nominal power condition, requires only 597 kW of power. Moreover, during the off-nominal power condition, the hybrid electrical system 100 requires only 151 kW of power. Thus, as compared to a conventional, fully-evaporative hot engine bleed air system, the hybrid electrical system 100 provides about a 28% power savings during nominal power conditions, and about an 81% power savings during off-nominal power conditions.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof Therefore, it is intended that the invention not be limited to the particular embodiment disclosed as the best mode contemplated for carrying out this invention, but that the invention will include all embodiments falling within the scope of the appended claims.

## Claims

1. An electrical ice protection system (100) for an aircraft operable in at least a nominal power condition, and an off-nominal power condition, and including a structure having at least an outer skin (112), the ice protection system (100) comprising:
a plurality of electrical heaters (102) disposed at least proximate the aircraft structure outer skin (112) and configured to heat at least a portion of the aircraft structure outer skin (112) upon energization thereof, the plurality of electrical heaters (102) including at least a first set of heaters (208-1, 308-1) and a second set of heaters (208-2, 308-2); and
a controller (104) configured to determine whether the aircraft is in the nominal power condition or the off-nominal power condition, the controller (104) coupled to each of the electrical heaters (102) and further configured, in response to the determined power condition, to:
selectively energize the first set of heaters (208-1,308-1) in a manner that the first set of heaters (208-1, 308-1) are operated in a fully-evaporative anti-ice mode, and
selectively energize the second set of heaters (208-2,308-2) in a manner that the second set of heaters (208-2, 308-2) are operated in:
(i) a wet running anti-ice mode, if the aircraft is in the nominal power condition, and
(ii) a de-ice mode, if the aircraft is in the off-nominal power condition.

2. The system (100) of Claim 1, wherein:
the plurality of electrical heather (102) further includes a third set of heaters (208-3, 308-3); and
the controller (104) is further configured, in response to the determined power condition, to selectively energize the third set of heaters (208-3, 308-3) in a manner that the third set of heaters (208-3, 308-3) are operated in the de-ice mode.

3. The system (100) of Claim 1, wherein the controller (104) is further configured, in response to the determined power condition, to selectively energize the first set of heaters (208-1,308-1) in a manner that the first set of heaters (208-1,308-1) are operated in:
(i) the fully-evaporative anti-ice mode, if the aircraft is in the nominal power condition, and
(ii) the de-ice mode, if the aircraft is in the off-nominal power condition.

4. The system (100) of Claim 1, wherein:
the structure is an engine nacelle (106) having at least an inboard surface (202) and an adjacent outboard surface (204), the inboard and outboard surfaces (202, 204) each having the outer skin (112) thereon;
the first set of heaters (208-1) are disposed proximate at least a section of the outer skin (112) that is on the engine nacelle inboard surface (202); and
the second set of heaters (208-2) are disposed proximate at least a section of the outer skin (112) that is the outer skin (112) on at least a section of the engine nacelle outboard surface (204).

5. The system (100) of Claim 4, wherein:
the plurality of electrical heaters (102) further includes a third set of heaters (208-3); and
the controller (104) is further configured to selectively energize the third set of heaters (208-3) in a manner that the third set of heaters (208-3) is operated in the de-ice mode.

6. The system (100) of Claim 5, wherein the controller (104) is configured to selectively energize the third set of heaters (208-3) in a manner that the third set of heaters (208-3) is operated in the de-ice mode whether the aircraft is in the nominal power condition or in the off-nominal power condition.

7. The system (100) of Claim 1, wherein:
the structure is an aircraft wing (108) or empennage (110) having at least an upper surface (302) and an adjacent lower surface (304), the upper and lower surfaces (302, 304) each having the outer skin (112) thereon;
the first set of heaters (308-1) are disposed proximate the outer skin (112) on at least a section of the structure upper surface (302); and
the second set of electrical heaters (308-2) are disposed proximate the outer skin (112) on at least a section of the structure second surface.

8. The system (100) of Claim 7, wherein:
the plurality of electrical heaters (102) further includes a third set of heaters (308-3); and
the controller (104) is further configured to selectively energize the third set of heaters (308-3) in a mariner that the third set of heaters (308-3) is operated in the de-ice mode.

9. The system (100) of Claim 8, wherein the controller (104) is configured to selectively energize the third set of heaters (308-3) in a manner that the third set of heaters (308-3) is operated in the de-ice mode whether the aircraft is in the nominal power condition or in the off-nominal power condition.

10. The system (100) of Claim 9, wherein the controller (104) is further configured, in response to the determined power condition, to selectively energize the first set of heaters (308-1) in a manner that the first set of heaters (308-1) are operated in:
(i) the fully-evaporative anti-ice mode, if the aircraft is in the nominal power condition, and
(ii) the de-ice mode, if the aircraft is in the off-nominal power condition.

## Patentansprüche

1. Elektrisches Enteisungssystem (100) für ein Flugzeug, das mindestens in einem Nennleistungszustand und einem Nicht-Nennleistungszustand betrieben werden kann und eine Struktur mit mindestens einer Außenhaut (112) aufweist, wobei das Enteisungssystem (100) Folgendes umfasst:
mehrere elektrische Heizungen (102), die mindestens in der Nähe der Außenhaut (112) der Flugzeugstruktur angeordnet und so konfiguriert sind, dass sie beim Anschalten mindestens einen Abschnitt der Außenhaut (112) des Flugzeugaufbaus heizen, wobei die mehreren elektrischen Heizungen (102) mindestens einen ersten Satz Heizungen (208-1, 308-1) und einen zweiten Satz Heizungen (208-2, 308-2) aufweisen, und
eine Steuerung (104), die konfiguriert ist, um zu bestimmen, ob das Flugzeug im Nennleistungszustand oder im Nicht-Nennleistungszustand ist, wobei die Steuerung (104) an jede der elektrischen Heizungen (102) gekoppelt und weiter dazu konfiguriert ist, als Reaktion auf den bestimmten Leistungszustand
den ersten Satz Heizungen (208-1, 308-1) so gezielt anzuschalten, dass der erste Satz Heizungen (208-1, 308-1) in einem Vollverdunstungseisverhinderungsmodus betrieben wird, und
den zweiten Satz Heizungen (208-2, 308-2) so gezielt anzuschalten, dass der zweite Satz Heizungen (208-2, 308-2) in
(i) einem Nasslaufeisverhinderungsmodus betrieben wird, wenn das Flugzeug im Nennleistungszustand ist, und
(ii) einem Eisbeseitigungsmodus betrieben wird, wenn das Flugzeug im Nicht-Nennleistungszustand ist.

2. System (100) nach Anspruch 1, wobei
die mehreren elektrischen Heizungen (102) ferner einen dritten Satz Heizungen (208-3, 308-3) aufweisen und
die Steuerung (104) ferner dazu konfiguriert ist, als Reaktion auf den bestimmten Leistungszustand den dritten Satz Heizungen (208-3, 308-3) gezielt so anzuschalten, dass der dritte Satz Heizungen (208-3, 308-3) im Eisbeseitigungsmodus betrieben wird.

3. System (100) nach Anspruch 1, wobei die Steuerung (104) ferner dazu konfiguriert ist, als Reaktion auf den bestimmten Leistungszustand den ersten Satz Heizungen (208-1, 308-1) gezielt so anzuschalten, dass der erste Satz Heizungen (208-1, 308-1) im
(i) Vollverdunstungseisverhinderungsmodus betrieben wird, wenn das Flugzeug im Nennleistungszustand ist, und
(ii) Eisbeseitigungsmodus betrieben wird, wenn das Flugzeug im Nicht-Nennleistungszustand ist.

4. System (100) nach Anspruch 1, wobei
die Struktur eine Triebwerksgondel (106) ist, die mindestens eine Innenfläche (202) und eine benachbarte Außenfläche (204) hat, wobei sich auf der Innen- und der Außenfläche (202, 204) jeweils die Außenhaut (112) befindet,
der erste Satz Heizungen (208-1) in der Nähe mindestens eines Teils der Außenhaut (112) angeordnet ist, die sich auf der Innenfläche (202) der Triebwerksgondel befindet, und
der zweite Satz Heizungen (208-2) in der Nähe mindestens eines Teils der Außenhaut (112) angeordnet ist, bei der es sich um die Außenhaut (112) auf mindestens einem Teil der Außenfläche (204) der Triebwerksgondel handelt.

5. System (100) nach Anspruch 4, wobei
die mehreren elektrischen Heizungen (102) ferner einen dritten Satz Heizungen (208-3) aufweisen und die Steuerung (104) ferner dazu konfiguriert ist, den dritten Satz Heizungen (208-3) gezielt so anzuschalten, dass der dritte Satz Heizungen (208-3) im Eisbeseitigungsmodus betrieben wird.

6. System (100) nach Anspruch 5, wobei die Steuerung (104) dazu konfiguriert ist, den dritten Satz Heizungen (208-3) gezielt so anzuschalten, dass der dritte Satz Heizungen (208-3) im Eisbeseitigungsmodus betrieben wird, ob das Flugzeug im Nennleistungszustand oder im Nicht-Nennleistungszustand ist.

7. System (100) nach Anspruch 1, wobei
die Struktur eine Flugzeugtragfläche (108) oder ein Leitwerk (110) ist, die bzw. das mindestens eine obere Fläche (302) und eine benachbarte untere Fläche (304) hat, wobei sich auf der oberen und der unteren Fläche (302, 304) jeweils die Außenhaut (112) befindet,
der erste Satz Heizungen (308-1) in der Nähe der Außenhaut (112) an mindestens einem Teil der oberen Fläche (302) der Struktur angeordnet ist, und
der zweite Satz elektrischer Heizungen (308-2) in der Nähe der Außenhaut (112) an mindestens einem Teil der zweiten Fläche der Struktur angeordnet ist.

8. System (100) nach Anspruch 7, wobei
die mehreren elektrischen Heizungen (102) ferner einen dritten Satz Heizungen (308-3) aufweisen und
die Steuerung (104) ferner dazu konfiguriert ist, den dritten Satz Heizungen (308-3) gezielt so anzuschalten, dass der dritte Satz Heizungen (308-3) im Eisbeseitigungsmodus betrieben wird.

9. System (100) nach Anspruch 8, wobei die Steuerung (104) dazu konfiguriert ist, den dritten Satz Heizungen (308-3) gezielt so anzuschalten, dass der dritte Satz Heizungen (308-3) im Eisbeseitigungsmodus betrieben wird, ob das Flugzeug im Nennleistungszustand oder im Nicht-Nennleistungszustand ist.

10. System (100) nach Anspruch 9, wobei die Steuerung (104) weiter dazu konfiguriert ist, als Reaktion auf den bestimmten Leistungszustand den ersten Satz Heizungen (308-1) gezielt so anzuschalten, dass der erste Satz Heizungen (308-1)
(i) im Vollverdunstungseisverhinderungsmodus betrieben wird, wenn das Flugzeug im Nennleistungszustand ist, und
(ii) im Eisbeseitigungsmodus betrieben wird, wenn das Flugzeug im Nicht-Nennleistungszustand ist.

## Revendications

1. Système électrique de protection contre le givre (100) pour un aéronef, utilisable au moins dans la condition de tension électrique nominale et dans une condition de tension électrique différente de la tension nominale, et incorporant une structure comprenant au moins une peau extérieure (112), le système de protection contre le givre (100) comprenant :
une pluralité de résistances électriques chauffantes (102) disposées au moins en position proximale à la peau extérieure de la structure de l'aéronef (112) et configurées de façon à chauffer au moins une partie de la peau extérieure de la structure de l'aéronef (112) lorsqu'elles sont activées, la pluralité de résistances électriques chauffantes (102) comprenant au moins un premier jeu de résistances électriques chauffantes (208-1, 308-1) et un deuxième jeu de résistances électriques chauffantes (208-2, 308-2) ; et
un contrôleur (104) configuré de façon à déterminer si l'aéronef est dans la condition de tension électrique nominale ou dans une condition de tension électrique différente de la tension nominale, le contrôleur (104) étant raccordé à chacune des résistances électriques chauffantes (102) et étant configuré de façon à, selon la condition de tension électrique trouvée :
activer sélectivement le premier jeu de résistances électriques chauffantes (208-1, 308-1) de manière à ce que le premier jeu de résistances électriques chauffantes (208-1, 308-1) soit exploité en mode d'antigivrage entièrement évaporatif, et
activer sélectivement le deuxième jeu de résistances électriques chauffantes (208-2, 308-2) de manière à ce que le deuxième jeu de résistances électriques chauffantes (208-2, 308-2) soit exploité :
i) en mode d'antigivrage liquide si l'aéronef est dans une condition de tension électrique nominale, et
ii) en mode de dégivrage, si l'aéronef est dans une condition de tension électrique différente de la tension nominale.

2. Système (100) selon la revendication 1 :
la pluralité de résistances électriques chauffantes (102) comprenant en outre un troisième jeu de résistances électriques chauffantes (208-3, 308-3) ; et
le contrôleur (104) étant en outre configuré de façon à, selon la condition de tension électrique trouvée, activer sélectivement le troisième jeu de résistances électriques chauffantes (208-3, 308-3) de manière à ce que le troisième jeu de résistances électriques chauffantes (208-3, 308-3) soit exploité en mode de dégivrage.

3. Système (100) selon la revendication 1, le contrôleur (104) étant en outre configuré de façon à, selon la condition de tension électrique trouvée, activer sélectivement le premier jeu de résistances électriques chauffantes (208-1, 308-1) de manière à ce que le premier jeu de résistances électriques chauffantes (208-1, 308-1) soit exploité :
i) en mode d'antigivrage entièrement évaporatif si l'aéronef est dans la condition de tension électrique nominale, et
ii) en mode de dégivrage, si l'aéronef est dans une condition de tension électrique différente de la tension nominale.

4. Système (100) selon la revendication 1 :
la structure étant une nacelle de moteur (106) comprenant au moins une surface intérieure (202) et une surface extérieure adjacente (204), les surfaces intérieure et extérieure (202, 204) étant chacune revêtue de la peau extérieure (112) ;
le premier jeu de résistances électriques chauffantes (208-1) étant disposé en position proximale à au moins une partie de la peau extérieure (112) présente sur la surface intérieure (202) de la nacelle de moteur ; et
le deuxième jeu de résistances électriques chauffantes (208-2) étant disposé en position proximale à au moins une partie de la peau extérieure (112) c'est-à-dire la peau extérieure (112) présente sur au moins une partie de la surface extérieure (204) de la nacelle de moteur.

5. Système (100) selon la revendication 4 :
la pluralité de résistances électriques chauffantes (102) comprenant en outre un troisième jeu de résistances électriques chauffantes (208-3) ; et
le contrôleur (104) étant en outre configuré de façon à activer sélectivement le troisième jeu de résistances électriques chauffantes (208-3) de manière à ce que le troisième jeu de résistances électriques chauffantes (208-3) soit exploité en mode de dégivrage.

6. Système (100) selon la revendication 5, le contrôleur (104) étant configuré de façon à activer sélectivement le troisième jeu de résistances électriques chauffantes (208-3) de manière à ce que le troisième jeu de résistances électriques chauffantes (208-3) soit exploité en mode de dégivrage, que l'aéronef soit dans la condition de tension électrique nominale ou dans une condition de tension électrique différente de la tension nominale.

7. Système (100) selon la revendication 1 :
la structure étant une aile (108) ou un empennage (110) d'aéronef comprenant au moins une surface supérieure (302) et une surface inférieure adjacente (304), les surfaces supérieure et inférieure (302, 304) étant chacune revêtue de la peau extérieure (112) ;
le premier jeu de résistances électriques chauffantes (308-1) étant disposé en position proximale à la peau extérieure (112) sur au moins une partie de la surface supérieure de la structure (302) et
le deuxième jeu de résistances électriques chauffantes (308-2) étant disposé en position proximale à la peau extérieure (112) sur au moins une partie de la deuxième surface de la structure.

8. Système (100) selon la revendication 7 :
la pluralité de résistances électriques chauffantes (102) comprenant en outre un troisième jeu de résistances électriques chauffantes (308-3) ; et
le contrôleur (104) étant en outre configuré de façon à activer sélectivement le troisième jeu de résistances électriques chauffantes (308-3) de manière à ce que le troisième jeu de résistances électriques chauffantes (308-3) soit exploité en mode de dégivrage.

9. Système (100) selon la revendication 8, le contrôleur (104) étant configuré de façon à activer sélectivement le troisième jeu de résistances électriques chauffantes (308-3) de manière à ce que le troisième jeu de résistances électriques chauffantes (308-3) soit exploité en mode de dégivrage, que l'aéronef soit dans la condition de tension électrique nominale ou dans une condition de tension électrique différente de la tension nominale.

10. Système (100) selon la revendication 9, le contrôleur (104) étant en outre configuré de façon à, selon la condition de tension électrique trouvée, activer sélectivement le premier jeu de résistances électriques chauffantes (308-1) de manière à ce que le premier jeu de résistances chauffantes (308-1) soit exploité :
i) en mode d'antigivrage entièrement évaporatif si l'aéronef est dans la condition de tension électrique nominale, et
ii) en mode de dégivrage, si l'aéronef est dans une condition de tension électrique différente de la tension nominale.
